# EUROPÄISCHE PATENTSCHRIFT

(11) **EP 0 519 318 B1**
(45) Veröffentlichungstag und Bekanntmachung des Hinweises auf die Patenterteilung: **12.03.1997**
(21) Anmeldenummer: 92109806.7
(22) Anmeldetag: 11.06.1992
(51) Int. Cl.: B29C 45/17, B65G 65/00

(54) **Vorrichtung sowie Transporteinheit für den Abtransport von Spritzteilen aus einer Kunststoff-Spritzgiessmaschine**
Apparatus and transport unit for removing injection moulded articles from a plastic injection moulding machine
Dispositif et unité de transport pour l'évacuation d'articles injectés d'une machine à mouler par injection

(30) Priorität: 19.06.1991 DE 4120129; 19.06.1991 DE 4120131
(43) Veröffentlichungstag der Anmeldung: 23.12.1992
(73) Patentinhaber: Hehl, Karl, D-72290 Lossburg (DE)
(72) Erfinder: Hehl, Karl, D-72290 Lossburg (DE)
(74) Vertreter: Reinhardt, Harry

(56) Entgegenhaltungen:
- EP-A- 0 335 658
- EP-A- 0 359 014
- US-A- 5 032 053

## Beschreibung

Die Erfindung betrifft eine Vorrichtung entsprechend dem Oberbegriff des Patentanspruches 1 sowie eine Transporteinheit entsprechend dem Oberbegriff des Patentanspruches 7.

Bei einer bekannten Vorrichtung dieser Art (DE-PS 38 30 958) werden die aus dem Spritzwerkzeug kommenden Spritzteile in Paletten abgefüllt, die sich in einer Füllstation befinden. Diese Paletten werden in einem Palettenturm in Transporteinheiten bereitgestellt, wobei die Entnahme der leeren Paletten aus einer Transporteinheit erfolgt und die Aufnahme der gefüllten Palette in einer anderen Transporteinheit erfolgt. Die Transporteinheiten bestehen aus einer Transportpalette, auf der mehrere stapelbare Paletten zu einer Stapeleinheit verbunden sind. Gefüllte Transporteinheiten werden von einer Übergabeeinrichtung auf ein parallel zur vertikalen Symmetrieebene der Spritzgießmaschine linear verfahrbares Transportfahrzeug übergeben, das auch für den Transport auszuwechselnder Spritzwerkzeuge derart eingerichtet ist, daß gleichzeitig ein Spritzteilebehälter und ein Spritzwerkzeug transportiert werden können. Zur Entnahme der Paletten aus und zur Überführung der gefüllten Paletten in den Palettenturm ist jedoch ein großer programmtechnischer und konstruktiver Aufwand erforderlich, da die in die Füllstation einzuführenden Paletten erst durch mehrere Vertikal bewegungen des Fahrstuhls vereinzelt werden müssen. Dadurch können unerwünschte zeitliche Engpässe beim Austausch der Paletten entstehen.

Bei einer weiteren Vorrichtung nach der US-A 5,032,053 können die Paletten einzeln aus der Transporteinheit entnommen und dieser nach Befüllung wieder zugeführt werden. Zum Palettenwechsel sind keine Vertikalbewegungen des Fahrstuhls mehr erforderlich. Während der Befüllung der Palette ist der Fahrstuhl aber dennoch vertikal frei beweglich, so daß die Zuführung von Transporteinheiten mit leeren Paletten als auch die Entnahme einer Transporteinheit mit gefüllten Paletten auf jedem Niveau möglich ist. Zudem wird selbst bei ungünstigster Einwechslung der Transporteinheit in den Palettenturm die Stillstandszeit dadurch vermindert, daß es prinzipiell möglich ist, jede beliebige leere Palette zu entnehmen, gleichgültig, ob sie in der Transporteinheit oben, unten oder in der Mitte angeordnet ist. Dennoch können die Paletten nicht problemlos den in der Transporteinheit befindlichen Raum ausnutzen, da die Führungen für die einzelnen Paletten fest mit der Transporteinheit verbunden sind. Insofern können größere Teile nur dadurch transportiert werden, daß einzelne Palettenführungen nicht belegt werden, was sowohl die zu bewegenden Massen erhöht als auch aufgrund des Eingriffes der Palettenführungen in den zur Verfügung stehenden Raum die Transportkapazität der einzelnen Transporteinheit verringert.

Ferner sind aus der JP-OS 57-184001 (Patent Abstracts of Japan, Band 7, Nr. 29 (M-191) (1174)) bzw. der JP-OS 60-262776 (Patent Abstracts of Japan, Band 10, Nr. 142 (M-481) (2199)) Transportwagen bekannt, in denen einzelne Spritzteilebehälter auf Stützplatten abgestützt sind bzw. Werkstücke einzeln so aufgenommen sind, daß sie zur weiteren Bearbeitung durch eine horizontale Bewegung entnommen werden können. In beiden Fällen befinden sich jedoch die Abstützungen für die Spritzteile bzw. die Werkstücke in unveränderlich festen Abständen, daß eine optimale Raumausnutzung des zur Verfügung stehenden Transportraums in Abhängigkeit von der Größe der Spritzteile bzw. Werkstücke erschwert ist.

Bei der JP-OS 57-184001 (Patent Abstracts of Japan, Band 7, Nr. 29 (M-191) (1174)) werden die Spritzteilebehälter über eine hydraulische Einrichtung aus dem Transportwagen herausgezogen und anschließend mit den herbeigeführten Spritzteilen kontinuierlich befüllt. Um diese kontinuierliche Befüllung zu verwirklichen, wird unter den nachgeschobenen Spritzteilen der Spritzteilebehälter allmählich wieder zurück in den Transportwagen geschoben, so daß während der Befüllung der Transportwagen einer freien Bewegung nicht zugänglich ist. Sobald der Behälter befüllt ist, wird durch eine Klappe die weitere Zufuhr der Spritzteile so lange unterbrochen, bis der Transportwagen vertikal verfahren, eine neue Palette entnommen und diese in Ausgangsstellung überführt worden ist. Eine solche Konstruktion führt zu unerwünschten Unterbrechungen, da einerseits ein kontinuierliches Befüllen der Paletten insbesondere bei Verwendung einer Entnahmeeinrichtung nicht möglich ist und andererseits während des Wechsels des Transportwagens eine längere Pause eintritt, bis der neue Transportwagen wieder in Bereitschaftstellung ist.

Aus der US-PS 4,687,403, insbesondere Figuren 2-5, ist es weiterhin bekannt, durch einen großen konstruktiven Aufwand einzelne Paletten aus einem Palettenstapel durch mehrere vertikale Bewegungen eines Fahrstuhls zu entnehmen. Dabei wird der Palettenstapel in zwei Palettenstapel unterteilt, so daß aus dem einen Palettenstapel die leeren Paletten entnommen und nach Befüllung dem anderen Palettenstapel zugeführt werden können. Nach Abarbeitung eines ganzen Palettenstapels wird dieser aus der Einrichtung hinausgeschoben und zur Abholung bereitgestellt, ohne daß entsprechende Transportpaletten vorhanden sind.

Angesichts dieses angeführten Standes der Technik liegt der Erfindung die Aufgabe zugrunde, eine Vorrichtung und eine Transporteinheit der eingangs genannten Art derart weiterzubilden, daß sie leicht an unterschiedliche Palettengrößen anpaßbar sind, ohne den programmtechnischen Aufwand zu erhöhen.

Diese Aufgabe wird bei einer Vorrichtung mit den Merkmalen des Patentanspruches 1 sowie bei einer Transporteinheit mit den Merkmalen des Patentanspruches 7 gelöst.

Dadurch ist eine Anpassung an unterschiedlich hohe Stapelpaletten für unterschiedlich große Spritzteile bei Bildung von standardisierten Transporteinheiten gleicher Größe gewährleistet. Selbst bei ungünstigster Einwechslung werden Stillstandszeiten dadurch vermindert, daß es prinzipiell möglich ist, jede beliebige leere Palette wie die Schubladen in einem Schrank zu entnehmen, gleichgültig ob sie in der Transporteinheit oben, unten oder in der Mitte angeordnet ist. Je nach Größe des Spritzteils kann zudem die Zahl der Paletten je Transporteinheit für eine bessere Einsatzmöglichkeit der Transporteinheit optimiert werden, was zugleich die Belastung des Transportfahrzeuges durch Bereitstellung leerer Paletten und Abtransport gefüllter Paletten verringert. Dadurch wird auch beim Kunden Stapelraum eingespart. Der Palettenwechsel kann meist innerhalb von Sekunden, also ohne weiteres innerhalb eines Spritzzyklus stattfinden.

Bei einer Ausbildung nach Anspruch 2 wird der Raum unter den Transporteinheiten für eine unmittelbare Übernahme auf das Transportfahrzeug ausgenutzt.

Bei einer Ausbildung nach Anspruch 4 wird der programmtechnische Aufwand weiter verringert. Soweit erforderlich werden Sensoren eingesetzt, die einerseits erkennen, wieviel Paletten pro Transporteinheit vorgesehen sind und andererseits bei Einführung der Palette in die Füllstation auch erkennen, ob die vorliegende Palette überhaupt für die aus der Spritzgießmaschine kommenden Spritzteile geeignet ist. Dadurch wird die Störanfälligkeit noch weiter verringert.

Bei einer Ausbildung nach Anspruch 5 wird erreicht, daß die Transporteinheiten mit dem gleichen Transportfahrzeug transportiert werden können, wie die Spritzwerkzeuge beim Wechsel des Spritzwerkzeugs oder wie der Plastifizierzylinder. Die Übernahme auf das Transportfahrzeug kann aus Sicht des Transportfahrzeugs sowohl aktiv als auch passiv dadurch erfolgen, daß zum Beispiel das Transportfahrzeug unmittelbar unter dem Palettenturm die gefüllten Transporteinheiten entnimmt.

Bei einer Ausbildung nach Anspruch 8 kann die Transportpalette nach einem Baukastenprinzip sowohl zur Aufnahme nur einer großen Palette als auch zur Aufnahme mehrerer Paletten vorgesehen werden. Bei der Aufnahme einer großen Palette werden bedarfsweise einfach die vertikalen Tragelemente der Transportpalette abgenommen.

Um dennoch von der Größe der jeweiligen Paletten unabhängig zu sein, werden bei einer Ausbildung nach Anspruch 9 auf die jeweiligen Paletten abgestimmte Auflageplatten vorgesehen, die auf den Führungsschienen der Transporteinheit geführt sind.

Bei einer Ausbildung nach Anspruch 10 wird erreicht, daß die Transporteinheiten mit dem gleichen Transportfahrzeug transportiert werden können, wie die Spritzwerkzeuge beim Wechsel des Spritzwerkzeugs oder wie der Plastifizierzylinder.

Nachstehend wird die Erfindung anhand der Zeichnungen an einem Ausführungsbeispiel näher erläutert.

Es zeigen:
- Fig. 1: Die Vorrichtung an einer Spritzgießmaschine in perspektivischer Darstellung (Füllstation des Teilebehälters innerhalb der Grundrißfläche der Spritzgießmaschine) mit teilweise entfernter Entnahmeeinrichtung,
- Fig. 2: die in eine Spritzgießmaschine integrierte Vorrichtung in vergrößerter Darstellung als Draufsicht,
- Fig. 2a: einen Ausschnitt aus der Antriebseinrichtung gemäß Fig. 2 in vergrößerter Darstellung,
- Fig. 3: die Vorrichtung gemäß Fig. 2 in Stirnansicht,
- Fig. 4,5: eine Variante der Vorrichtung (Füllstation außerhalb der Grundrißfläche der Spritzgießmaschine),

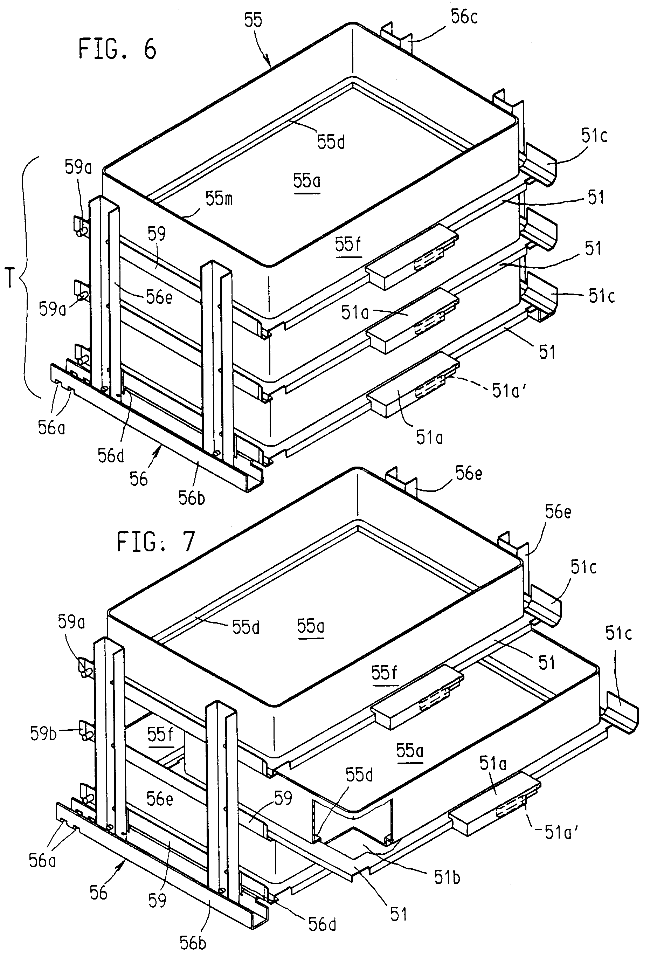

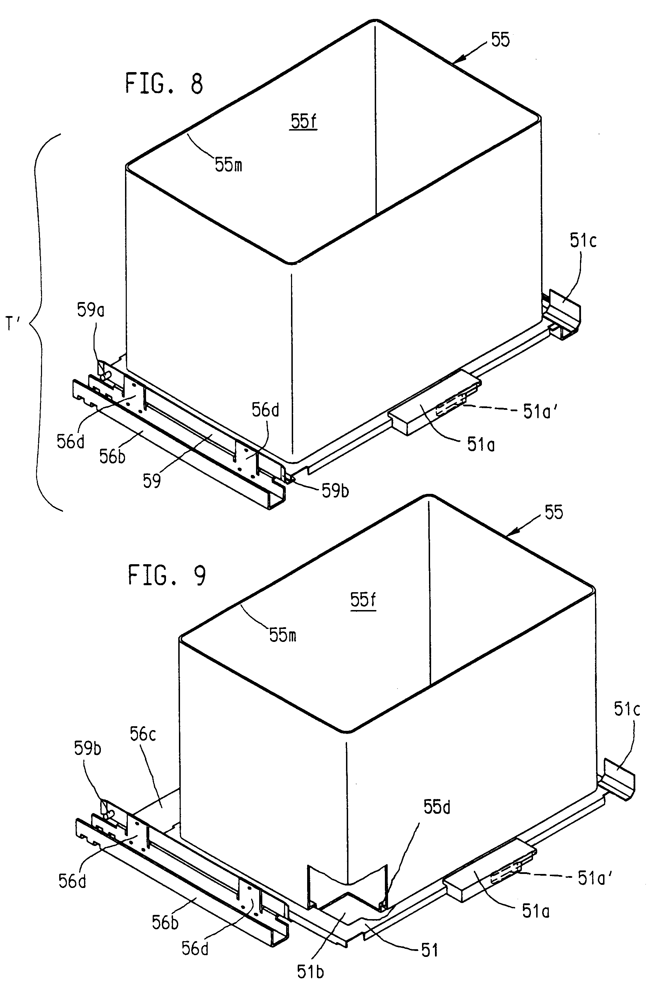

- Fig. 6-9: Transporteinheiten mit mehreren oder nur einer Palette auf einer Transportpalette und teilweise herausgezogenen Paletten,
- Fig. 10: die Transportpalette gemäß den Figuren 6 und 7 ohne Auflageplatten und Paletten,
- Fig. 11: eine Auflageplatte mit zugeordneter Palette,
- Fig. 12-14: die Auflageplatte mit aufgesetzter Palette in Seitenansicht, Frontansicht und Draufsicht und
- Fig. 15: einen vergrößerten aufgeschnittenen Ausschnitt entsprechend dem Schnittbereich durch Palette und Transportpalette aus Fig. 13.

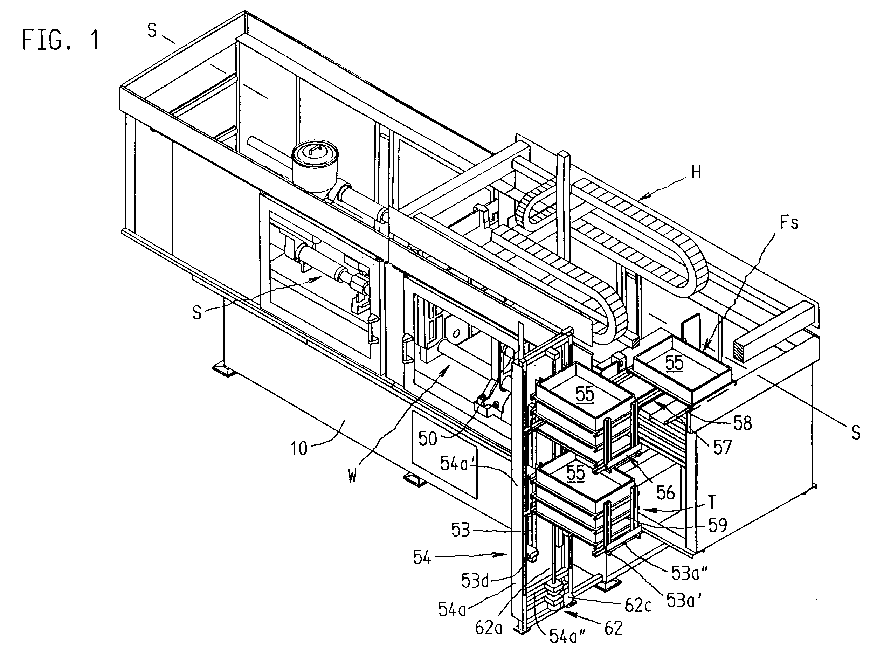

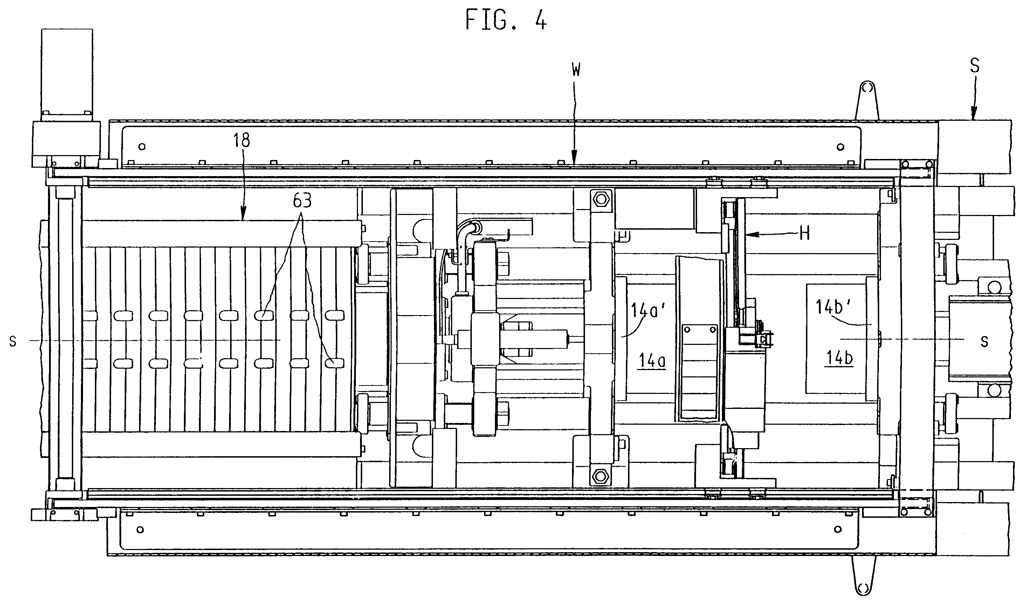

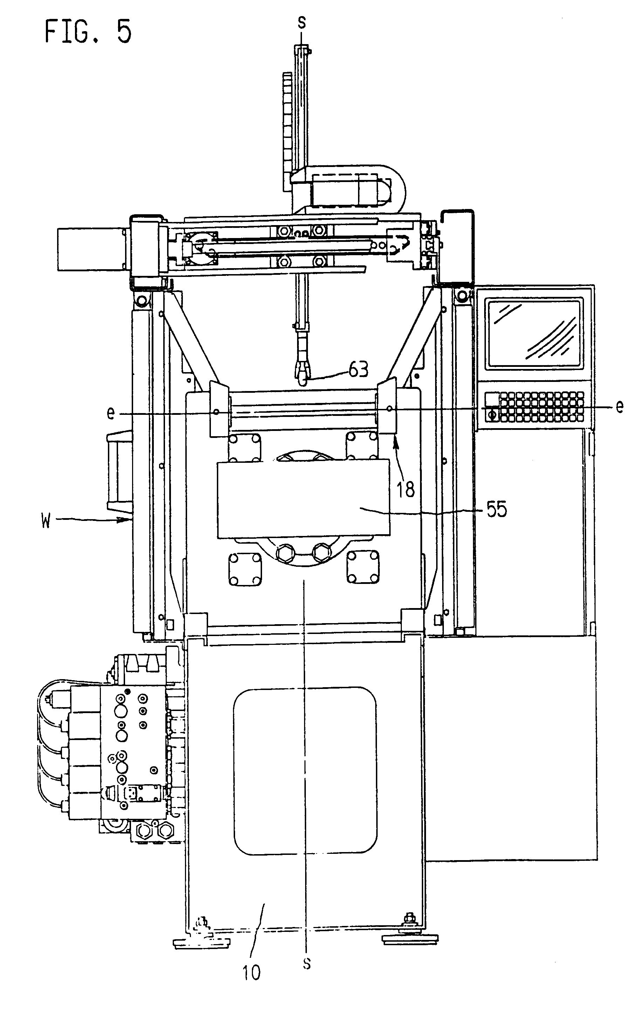

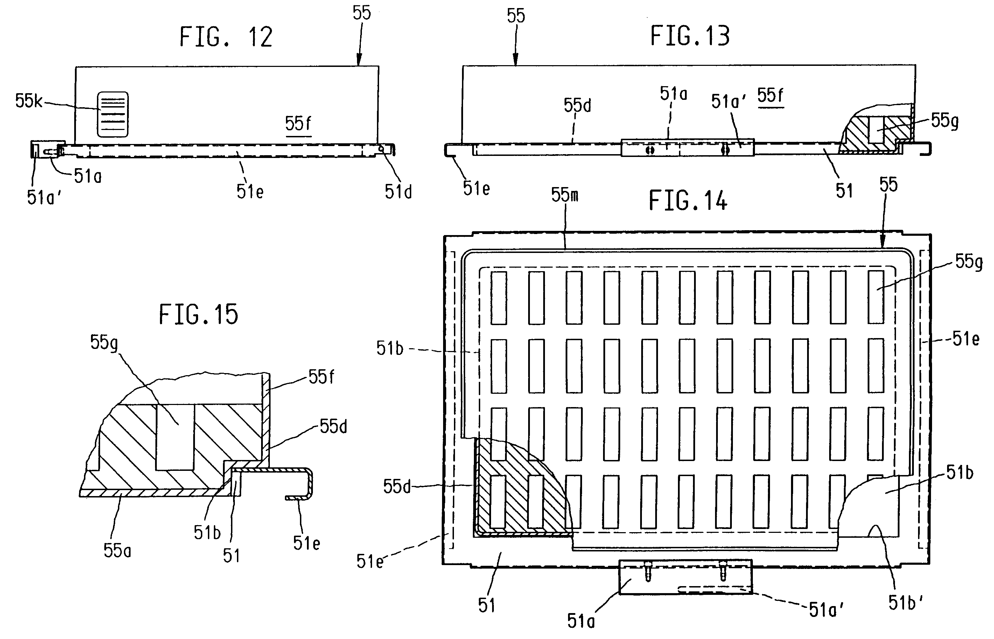

Die Kunststoff-Spritzgießmaschine, an welcher die Vorrichtung verwirklicht ist, umfaßt eine horizontale Spritzgießeinheit S und eine horizontal angeordnete Werkzeugschließeinheit W. Beide Einheiten sind auf einem Maschinengestell 10 abgestützt. Der Abtransport der beim Spritzbetrieb anfallenden Spritzteile 63 aus der Spritzgießmaschine geschieht mit Hilfe von Paletten 55. Diese werden in einer Füllstation Fs im Bereich der Spritzgießmaschine gefüllt. Im konkreten zeichnerisch dargestellten Ausführungsbeispiel ist die Füllstation wahlweise innerhalb der Spritzgießmaschine (Fig. 1-3) oder außerhalb derselben im Bereich der die Werkzeugschließeinheit begrenzenden Stirnseite angeordnet (Fig. 4,5). Im ersten Fall wird die Palette 55 mit Hilfe einer die Spritzteile 63 aus der geöffneten Spritzgießform entnehmenden Entnahmeeinrichtung H gefüllt. Dabei werden die Spritzteile reihenweise unter Fixierung in Mulden 55g (Fig. 13-15) im Gefolge stufenweiser Bewegungen des Greifers der Entnahmeeinrichtung H quer zur Symmetrieebene s-s abgelegt. Im zweiten Fall wird die Palette 55 mittels eines Förderbandes 18 gefüllt, welches die Spritzteile parallel zur Symmetrieebene s-s transportiert. Das Förderband 18 wird seinerseits vom Greifer der Entnahmeeinrichtung beschickt. Möglich ist aber auch die Füllung der Palette 55 mittels eines Förderbandes, das die aus der geöffneten Spritzgießform ausfallenden Spritzteile aufnimmt (Fig. 5).

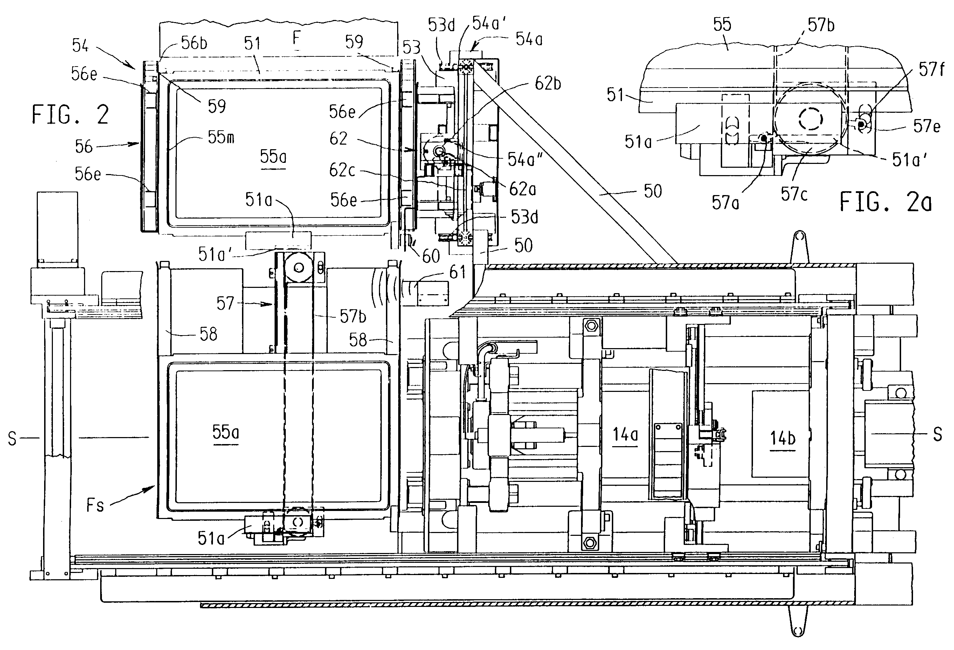

Die Paletten 55 sind derart ausgebildet, daß sie unter gegenseitiger Zentrierung bedarfsweise zu Stapeleinheiten stapelbar sind. Zur Bereitstellung für die Befüllung in der Füllstation Fs werden sie jedoch in einem Palettenturm 54 einzeln abgestützt. Der Palettenturm 54 ist zwischen der Füllstation Fs und einem weiteren Transportmittel, z.B. einem Transportfahrzeug F (Fig. 2) oder einer Rollenbahn angeordnet und befindet sich an der Rückseite der Spritzgießmaschine außerhalb deren Grundrißfläche. Er ist auf dem Boden abgestellt und überragt die Spritzgießmaschine nach oben. An vertikalen Skelettelementen 54a' des Profilskelettes 54a des Palettenturms 54 ist ein Fahrstuhl 53 mittels Rollen 53d verfahrbar. Der Fahrstuhl 53 ist für die Aufnahme von wenigstens zwei Transporteinheiten T,T' vorbereitet. Der im übrigen während des Füllvorgangs bedarfsweise frei bewegliche Fahrstuhl befindet sich bei der Entnahme der Palette 55 aus als auch bei der Überführung der gefüllten Palette 55 in den Palettenturm 54 in einer Stellung, die zumindest eine Überführung der gefüllten Palette an den Platz in der jeweiligen Transporteinheit T,T' erlaubt, an dem die Palette 55 zuvor aus dieser Transporteinheit entnommen worden ist. Die Überführung der zu befüllenden Paletten 55 in die Füllstation Fs erfolgt lediglich durch eine horizontale Bewegung. Vor Einleitung dieser Bewegung befindet sich der Fahrstuhl nach einer durch eine Wegmeßeinrichtung 52 überwachten vertikalen Bewegung in einer Stellung, in der Palettenführungen 59 der jeweiligen Transporteinheit an Palettenführungen 58 der Füllstation Fs anschließen. Nach der Befüllung werden die Paletten 55 mit der Transportpalette wieder zu einer Transporteinheit verbunden, die anschließend dem Transportfahrzeug übergeben oder von ihm übernommen werden kann.

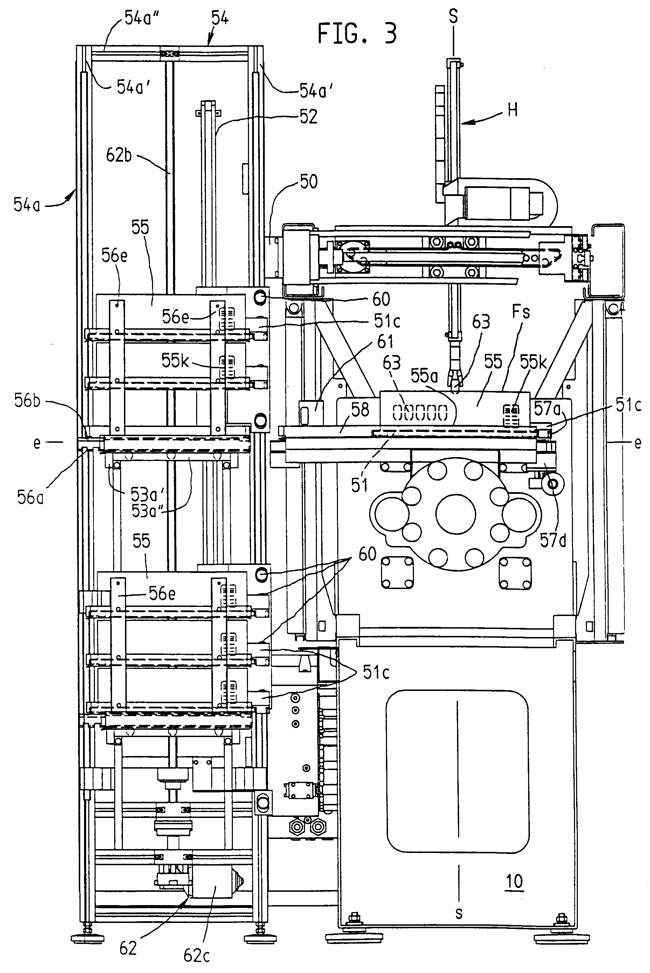

Die Antriebseinrichtung 57, die die horizontale Bewegung der Paletten ermöglicht, ohne daß es noch einer weiteren Bewegung des Fahrstuhls bedarf, umfaßt eine unterhalb der sich in der Füllstation befindlichen Palette 55 angeordnete endlose Kette 57b. Ein Mitnehmerstift 57a dieser Kette wird im Gefolge einer halbkreisförmigen Bewegung am Kettenrad 57c mit einer Auflageplatte über eine Quernut 51a' des Kupplungselements 51a gekuppelt. Diese Auflageplatte 51 gleitet auf den Palettenführungen 59 der Transporteinheit und trägt in einer Ausnehmung 51b die jeweiligen Paletten, so daß beliebige Paletten den jeweiligen Auflageplatten zugeordnet werden können. Zwar können auch die Paletten selbst auf den Palettenführungen 58,59 geführt werden, doch trägt dies erheblich zu einer Abnutzung der Paletten bei, die bei Zwischenschaltung von Auflageplatten doch vermieden werden kann. Wie aus Fig. 2 und 3 ersichtlich, sind die Achsen der als Gliederkette ausgebildeten endlosen Kette 57b der Antriebseinrichtung 57 senkrecht angeordnet. Der Mitnehmerstift ist, wie insbesondere aus Fig. 2a ersichtlich, an den Kettengliedern so befestigt, daS er, einen größeren Radius als das Kettenrad beschreibend, nach oben die Kette überragt. Die Kupplung selbst erfolgt dadurch, daß der Mitnehmerstift 57a im Gefolge einer seitlichen Einsteuerung in die im vorliegenden Fall nur zur Hälfte aus vollem Material ausgefräste Quernut eingeführt wird. Um bei der Transportbewegung unnötige Bewegungen der Kette zu vermeiden, sind an der Kette auch Schaltelemente 57e vorgesehen, die bei Annäherung an Endschalter 57f die Bewegung der Kette beenden (Fig. 2,2a).

Das Profilskelett 54a des Palettenturms 54 besteht aus zwei ungefähr in einer vertikalen Ebene stehenden Skelettelemente 54a', die durch horizontale Skelettelemente miteinander verbunden sind. Dabei ist der Palettenturm durch mehrere Abstützelemente 50 mit der Spritzgießmaschine verbunden. Diese in erster Linie ebene Anordnung des Profilskeletts erlaubt die sowohl rückseitige als auch seitliche Anbindung der Spritzgießmaschine an ein Transportfahrzeug F. Diese Anbindungsmöglichkeit wird konsequent fortgesetzt, als die Hubspindeleinrichtung, die für die Verfahrbarkeit des Fahrstuhls vorgesehen ist, ebenfalls grundsätzlich in der Vertikalprojektion des Profilskeletts 54a angeordnet ist. Eine am Fahrstuhl 53 befestigte Gewindemutter 62b befindet sich im Eingriff mit der rotierenden Gewindespindel 62a der Hubspindeleinrichtung, welche Spindel oben und unten am Profilskelett angelenkt ist. Um die raumsparende Anordnung des Profilskeletts dabei nicht zu stören, ist auch der Motor 62c der Hubspindeleinrichtung nahezu in der Vertikalprojektion des Profilskeletts 54a horizontal angeordnet und treibt die Hubspindel 62a über ein Umlenkgetriebe an.

Um eine möglichst ausreichende Beweglichkeit des Fahrstuhls im Palettenturm zu erreichen, ist der Palettenturm 54 mindestens doppelt so hoch wie der Fahrstuhl 53, in dem mindestens zwei Transporteinheiten T,T' übereinander aufnehmbar sind. Der Fahrstuhl selbst besitzt zwei Aufnahmegabeln 53a für die Transporteinheiten, welche Aufnahmegabeln durch zwei parallele, über wenigstens einen Quersteg 53a'' miteinander verbundene Schienen 53a' gebildet sind. Diese Aufnahmegabeln und somit auch die Transportpaletten 56 der Transporteinheiten T,T' befinden sich dabei stets in einem solchen gegenseitigen Abstand, der mindestens der Höhe einer Transporteinheit entspricht. Als Transporteinheit ist dabei die Einheit von Transportpalette 56 mit einer unterschiedlichen Anzahl von Paletten 55 zu verstehen, die jedoch stets nach Möglichkeit dieselben Außenabmessungen besitzen. Zur Erfassung der in einer Transporteinheit vorgesehenen Anzahl von Paletten 55 sind am Profilskelett 54a Signalgeber 60 angeordnet, deren Anzahl der größtmöglichen Palettenanzahl in der Transporteinheit T,T' und deren gegenseitiger Abstand einer Palette 55 geringster Höhe entspricht. Zur weiteren Absicherung befindet sich an den Paletten 55 ein Strichcode 55k, so daß durch einen an der Füllstation Fs angeordneten Lesesensor 61 die Art der Palette abgetastet werden kann und damit sichergestellt werden kann, daß die Aufnahmemulden 55g der Paletten auch mit den Spritzteilen 63 übereinstimmen.

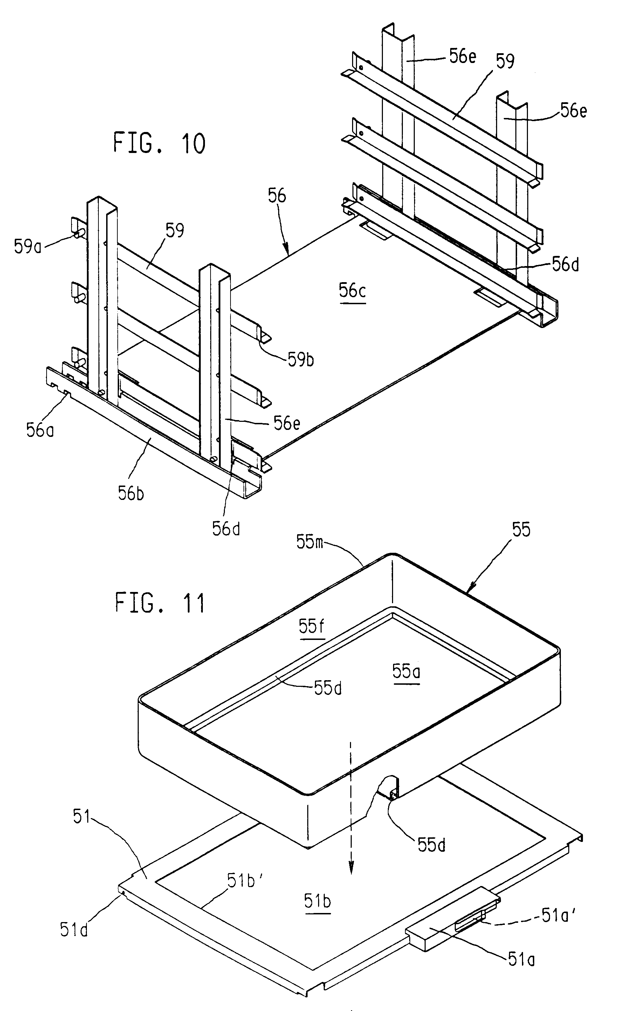

Die Transportpalette selbst besteht, wie insbesondere aus Fig. 10 ersichtlich, aus zwei Führungsschienen 56b, die mit einem Quersteg 56c (im konkreten Ausführungsbeispiel ein Querblech) miteinander verbunden sind. Dieses Grundelement besitzt bereits ein Auflageprofil, das dem Auflageprofil des Spritzwerkzeugs 14a,14b entspricht. Zudem entspricht auch das Querschnittsprofil der Führungsschienen dem Querschnittsprofil der Anlageplatten 14a',14b' des beim Gießformwechsel auf dem Transportfahrzeug zu transportierenden Spritzwerkzeuges. Solch ein Transportfahrzeug F (zeichnerisch nur schematisch in Fig. 2 angedeutet) ist bereits aus der DE 36 17 094 bekannt. Dieses Transportfahrzeug ist dafür vorgesehen, wahlweise Spritzwerkzeuge oder Transporteinheiten zu transportieren und eröffnet damit bedeutende Rationalisierungsmöglichkeiten des Transportsystems der Spritzgießmaschine. Aufgrund der baulichen Voraussetzungen kann eine Übernahmeeinrichrung des Transportfahrzeugs die Transporteinheit aktiv aus dem Palettenturm entnehmen bzw. in diesen rückseitig oder seitlich eingeschieben. Selbstverständlich ist auch eine andere Ausführung denkbar, bei der das Transportfahrzeug selbst passiv die entsprechenden Transporteinheiten übernimmt. Bei der aktiven Übernahme, wie sie im konkreten Ausführungsbeispiel dargestellt ist, sind daher an den Führungsschienen 56b bereits Quernuten 56a angeordnet, in die ein Mitnehmer einer Transportkette des Transportfahrzeuges F einsteuerbar ist. Das aus einem Blech durch Falten und Stanzen hergestellte Grundelement, bestehend aus zusammenhängenden Führungsschienen und Querblech, ist bereits für die baukastenmäßige Aufrüstung vorbereitet. Zu diesem Zweck sind daher Anschlußelemente 56d vorgesehen, an denen bedarfsweise vertikale Tragelemente 56e angeschlossen werden können. In beliebiger Höhe dieser Tragelemente 56e kann dann die je nach Palettenhöhe erforderliche Anzahl von Palettenführungen 59 angebracht werden, wodurch eine große Flexibilität hinsichtlich der Palettengrößen erreicht werden kann.

Es ergibt sich somit von selbst, daß die Paletten 55, die in der Transporteinheit T,T' je einzeln abgestützt sind, in Richtung der Spritzachse s-s durch die Tragelemente gesichert sind. Eine Sicherung existiert jedoch aber auch senkrecht zu dieser Richtung durch die federbelasteten Verriegelungselemente 59a. Diese Verriegelungselemente 59a stehen mit Rastöffnungen 51d der Auflageplatten in rastbarer Verbindung, die jedoch bei Horizontalbewegung der Palette durch die Antriebseinrichtung gelöst wird. Ferner weisen sowohl die Palettenführungen 59 als auch die Palettenführungen 58 abgewinkelte Endbereiche 59b auf, die ein problemloses Überführen aus dem Palettenturm in die Füllstation und umgekehrt erlauben.

Der die Mulden 55g besitzende Boden 55a ist von einer vertikalen Schutzwandung 55f umschlossen. Die Grundfläche des Bodens 55a ist, wie aus den Fign. 11-15 erkennbar, kleiner als der Grundriß der Schutzwand. Dadurch wird eine grundsätzliche Stapelbarkeit der Paletten gewährleistet. Mit dem Zentrierbereich 55d ruhen die Paletten auf den Auflageplatten 51. Zu diesem Zweck sind in den Auflageplatten 51 Ausnehmungen 51b vorgesehen, die dem jeweiligen Zentrierbereich entsprechen. Dennoch können die Paletten 55 außerhalb des Palettenturms und der Transporteinheit in raumsparender Weise gestapelt werden. Die Palette ist daher nicht selbst an der Transportpalette 56 unmittelbar abgestützt, sondern mittelbar über die Auflageplatte 51, wobei die Kontur 51b' der Ausnehmung 51b der Auflageplatte dem oberen Rand 55m einer Palette 55 entspricht. Bedarfsweise können zur Erkennung der Paletten bzw. zur Erkennung der in einer Transporteinheit befindlichen Palettenhöhe Kodiernasen 51c an der Auflageplatte 51 vorgesehen werden, die von den Signalgebern 60 erkannt werden. Zu diesem Zweck ist auch die Gleitschiene 51e in ihren Randbereichen etwas zurück versetzt.

Die bei der Variante gemäß Figuren 1-3 innerhalb der Grundrißfläche der Spritzgießmaschine angeordnete Füllstation kann mit geringem Montageaufwand in die Variante gemäß den Fign. 4,5 umgewandelt werden, bei welcher die Füllstation außerhalb der Grundrißfläche der Spritzgießmaschine liegt. Bei dieser Variante liegt die Füllstation vor derjenigen Stirnseite der Spritzgießmaschine, die der Werkzeugschließeinheit W benachbart ist. Der Montageaufwand beschränkt sich dabei im wesentlichen darauf, daß anstelle der Palettenführung 58 auf gleichem Höhen-Niveau ein endloses Förderband 18 in die Spritzgießmaschine eingefügt wird, so daß die Spritzteile 63 unmittelbar auf dem Förderband abgelegt werden können. Somit befindet sich aber die Palettenführung 58 etwa in der gleichen horizontalen Ebene e-e (Fig. 3) wie die Förderfläche des Förderbandes, wobei die Höhe dieser Ebene etwa in der Höhe der Oberkante des Spritzwerkzeugs 14a,14b liegt.

Dadurch, daß die Paletten in der Transporteinheit einzeln abgestützt sind, können die Paletten problemlos aus der jeweiligen Transporteinheit herausgezogen werden, wobei der Vergleich mit Schubladen naheliegt, die aus einem Schrank herausgezogen werden. Denn wie bei einem Schrank die Schubladen jeweils einzeln unabhängig voneinander und in beliebiger Reihenfolge heraus- und hineingeschoben werden können, eröffnet sich auch hier die Möglichkeit, die Paletten in beliebiger Reihenfolge abzuarbeiten, wobei vorzugsweise von oben nach unten oder von unten nach oben abgearbeitet wird. Die Befüllung verläuft dabei in der Art, daß zunächst eine Palette aus der Transporteinheit T,T' herausgezogen wird, sodann in der Füllstation Fs befüllt wird und anschließend an denselben Platz in der Transporteinheit zurückgeführt wird. Sodann erfolgt eine Absenkung oder ein Anheben des Fahrstuhles, bis die nächste Palette in Bereitschaftsposition ist. Während der Befüllung einer Palette 55 ist jedoch der gesamte Fahrstuhl vertikal frei beweglich, da keine störenden Anschlußelemente oder gar Palettenteile im für eine vertikale Bewegung erforderlichen Bewegungsraum zurückbleiben. Dadurch kann während der Befüllung einer Palette problemlos ein Abtransport einer gefüllten Transporteinheit und die Überführung einer leeren Transporteinheit bewerkstelligt werden. Durch diese vertikale Bewegungsmöglichkeit kommt es nicht darauf an, ob das Transportfahrzeug selbst dafür vorbereitet ist, z.B. mittels einer Hubeinrichtung, die Transporteinheiten in beliebiger Höhe zu übernehmen. Vielmehr braucht das Transportfahrzeug F überhaupt keine Hubeinrichtung aufzuweisen, da dem Fahrstuhl genügend Zeit verbleibt, die befüllte Transporteinheit auf ein Übergabeniveau für das Transportfahrzeug zu überführen.

## Patentansprüche

1. Vorrichtung für den Abtransport von Spritzteilen (63) aus einer Kunststoff-Spritzgießmaschine mit Hilfe von Paletten (55), die nach Entnahme aus einem Palettenturm (54) in einer Füllstation (Fs) im Bereich der Spritzgießmaschine gefüllt werden und dann aus der Füllstation wieder in den Palettenturm überführt werden, der wenigstens einen an Skelettelementen (54a') verfahrbaren, während des Füllvorgangs bedarfsweise frei beweglichen Fahrstuhl (53) zur Aufnahme von wenigstens zwei Transporteinheiten (T;T') aufweist, in dem die Paletten (55) mit am Fahrstuhl (53) abgestützten Transportpaletten (56) zu den Transporteinheiten verbindbar sind dadurch gekennzeichnet, daß die Transportpaletten (56) die Paletten (55) einzeln an Tragelementen abstützen, die je nach Palettenhöhe eine unterschiedliche Anzahl von Palettenführungen tragen, und daß sich der Fahrstuhl (53) sowohl bei der Entnahme der Palette (55) aus als auch bei der Überführung der gefüllten Palette (55) in den Palettenturm (54) in einer Stellung befindet, die eine Überführung der gefüllten Palette (55) zumindest an denselben Platz in der Transporteinheit (T;T') erlaubt, an dem die Palette (55) aus dieser Transporteinheit entnommen ist.

2. Vorrichtung nach Anspruch 1, dadurch gekennzeichnet, daß der Fahrstuhl (53) mittels einer am Profilskelett (54a) des Palettenturms (54) abgestützten Hubspindeleinrichtung (62) vertikal verfahrbar ist, deren am Fahrstuhl (53) befestigte Gewindemutter (62b) sich im Eingriff mit der rotierbaren Hubspindel (62a) der Hubspindeleinrichtung (62) befindet, wobei ihr Motor (62c) nahezu in der Vertikalprojektion des Profilskeletts (54a) des Palettenturms (54) horizontal angeordnet ist und die Hubspindel (62a) über ein Umlenkgetriebe antreibt.

3. Vorrichtung nach einem der vorhergehenden Ansprüche, dadurch gekennzeichnet, daß der Palettenturm (54) mindestens doppelt so hoch ist wie der Fahrstuhl (53), in dem mindestens zwei Transporteinheiten (T;T') übereinander aufnehmbar sind und an dem zwei Aufnahmegabeln (53a) für Transporteinheiten (T;T') vorgesehen sind, die durch zwei parallele, über wenigstens einen Quersteg (53a'') miteinander verbundene Schienen (53a') gebildet sind.

4. Vorrichtung nach einem der vorhergehenden Ansprüche, dadurch gekennzeichnet, daß am Profilskelett (54a) des Palettenturms (54) Signalgeber (60) angeordnet sind, deren Anzahl der größtmöglichen Palettenanzahl in der Transporteinheit (T;T') und deren gegenseitiger Abstand einer Palette (55) geringster Höhe entspricht und daß bedarfsweise die Paletten (55) mit einem Strichcode (55k) versehen sind, der durch an der Füllstation angeordnete Lesesensoren (61) abgetastet wird.

5. Vorrichtung nach einem der vorhergehenden Ansprüche, dadurch gekennzeichnet, daß die Transporteinheiten (T;T') mittels einer Übernahmeeinrichtung zur Übergabe auf oder Übernahme von einem Transportmittel rückseitig aus dem Palettenturm (54) ausfahrbar bzw. einfahrbar sind, wobei das Transportmittel ein für den Transport von Spritzwerkzeugen (14a,14b) eingerichtetes Transportfahrzeug (F) ist und daß die Transportpaletten (56) je ein das Auflageprofil des Spritzwerkzeuges (14a,14b) der Kunststoff-Spritzgießmaschine nachbildendes Auflageprofil aufweisen.

6. Vorrichtung nach Anspruch 5, dadurch gekennzeichnet, daß das Transportfahrzeug (F) mit der Übernahmeeinrichtung versehen ist, durch welche eine Transporteinheit (T;T') aus dem Palettenturm (54) ziehbar bzw. in diesen rückseitig oder seitlich einschiebbar ist, indem an wenigstens einer Führungsschiene (56b) der Transportpalette (56) je wenigstens eine Quernut (56a) angeordnet ist, in welcher ein Mitnehmer einer Transportkette des Transportwagens einsteuerbar ist.

7. Transporteinheit, insbesondere für den Abtransport von Spritzteilen aus einer Vorrichtung nach den Ansprüchen 1 bis 6, die aus einer Transportpalette (56) und wenigstens einer bedarfsweise mit der Transportpalette verbundenen Palette (55) gebildet ist, welche Palette zur Befüllung mit den aus der Spritzgießmaschine stammenden Spritzteilen von der Transporteinheit trennbar ist,
dadurch gekennzeichnet, daß die Transportpalette (56) Tragelemente (56e) aufweist, die für den Anschluß einer je nach Palettenhöhe unterschiedlichen Anzahl von Palettenführungen (59) vorgesehen sind, die die Paletten (55) einzeln abstützen.

8. Transporteinheit nach Anspruch 7, dadurch gekennzeichnet, daß die Tragelemente (56e) vertikal sind und bedarfsweise von der Transportpalette (56) an Anschlußelementen (56d) der Transportpalette abnehmbar sind.

9. Transporteinheit nach Anspruch 7 oder 8, dadurch gekennzeichnet, daß die Palette (55) selbst in einer Auflageplatte (51) gehalten ist, die auf den an den frei stehenden vertikalen Tragelementen (56e) befestigten Palettenführungen (59) der Transportpalette (56) geführt ist, wobei die Auflageplatte (51) das Kupplungselement (51a) für den Mitnehmerstift (57a) der Kette (57b) der Antriebseinrichtung (57) aufweist.

10. Transporteinheit nach einem der Ansprüche 7-9, dadurch gekennzeichnet, daß die Transportpaletten (56) je ein das Auflageprofil des Spritzwerkzeuges (14a,14b) der Kunststoff-Spritzgießmaschine nachbildendes Auflageprofil aufweisen, das durch zwei parallele, über wenigstens einen Quersteg (56c) miteinander verbundene Führungsschienen (56b) gebildet ist, deren Querschnittsprofil dem Querschnittsprofil der Anlageplatten (14a',14b') eines beim Gießformwechsel auf einem dafür eingerichteten Transportfahrzeug (F) zu transportierenden Spritzwerkzeuges (14a,14b) entspricht, wobei an wenigstens einer Führungsschiene (56b) der Transportpalette (56) je wenigstens eine Quernut (56a) angeordnet ist, in welcher ein Mitnehmer einer Transportkette des Transportfahrzeugs einsteuerbar ist.

## Claims

1. Device for removal of injected articles (63) from a plastics injection moulding machine with the aid of pallets (55) which, after removal from a pallet tower (54), are loaded in a filling station (Fs) in the vicinity of the injection moulding machine, and are then transferred from the filling station back into the pallet tower, which has at least one elevator (53), movable on skeleton members (54a') and if necessary freely movable during the loading procedure, for receiving at least two transport units (T;T'), in which the pallets (55), with transport pallets (56) supported on the elevator (53) are connectable to the transport units, characterised in that the transport pallets (56) individually support the pallets (55) on carrier members which, depending on the pallet height, carry a variable number of pallet guide means, and in that the elevator (53), both during removal of the pallet (55) from, and during transfer of the loaded pallet (55) into the pallet tower (54), is in a position permitting transfer of the loaded pallet (55) at least to the same place in the transport unit (T;T') from which the pallet (55) was removed from this transport unit.

2. Device according to claim 1, characterised in that the elevator (53) is vertically movable by means of a lifting spindle arrangement (62) supported on the profiled skeleton (54a) of the pallet tower (54)and the threaded nut (62b) of which, attached to the elevator (53), is in engagement with the rotatable lifting spindle (62a) of the lifting spindle arrangement (62), its motor being arranged almost horizontally in the vertical projection of the profiled skeleton (54a) of the pallet tower (54) and driving the lifting spindle (62a) via a reversing gear.

3. Device according to one of the preceding claims, characterised in that the pallet tower (54) is at least twice as high as the elevator (53) in which at least two transport units (T;T') can be accommodated one above the other, and on which two take-up forks (53a) for transport units (T;T') are provided, which are formed by two parallel rails (53a') interconnected by at least one crossweb (53a'').

4. Device according to one of the preceding claims, characterised in that there are located, on the profiled skeleton (54a) of the pallet tower (54), signal emitters (60) which correspond in number to the largest possible number of pallets in the transport unit (T;T') and whose mutual spacing apart corresponds to a pallet (55) of minimum height, and in that, as required, the pallets (55) are provided with a bar code (55k) which is scanned by reader sensors (61) located at the filling station.

5. Device according to one of the preceding claims, characterised in that the transport units (T;T'), for transfer to or take-over by a take-over means, are withdrawable from or retractable into the pallet tower (54) from the rear by a transport means, the transport means being a transport vehicle (F) set up for transporting injection tools (14a, 14b), and in that the transport pallets (56) each have a support profile imitating the support profile of the injection tool (14a, 14b) of the plastics injection moulding machine.

6. Device according to claim 5, characterised in that the transport vehicle (F) is provided with the take-over device by means of which a transport unit (T;T') is withdrawable from the pallet tower (54) or is insertable at the rear or laterally therein, there being associated in each case with at least one guide rail (56b) of the transport pallet (56) at least one transverse groove (56a) into which an entrainment means of a transport chain of the transport vehicle can be directed.

7. Transport unit, especially for removal of injected articles from a device according to claims 1 to 6, formed from a transport pallet (56) and at least one pallet (55), if necessary connected to the transport pallet, said pallet being separable, for loading with the injected articles coming from the injection moulding machine, from the transport unit, characterised in that the transport pallet (56) has carrier members (56e) which are provided for connection of a number of pallet guides (59) said number varying in dependence on the pallet height, and said guides supporting the pallets (55) individually.

8. Transport unit according to claim 7, characterised in that the carrier members (56e) are vertical and if required are removable from the transport pallet (56) at connector members (56d) of the transport pallet.

9. Transport unit according to claim 7 or 8, characterised in that the pallet (55) itself is held in a support plate (51) which is guided on the pallet guides (59) of the transport pallet (56) attached to the free-standing vertical carrier members (56e), the support plate (51) having the coupling member (51a) for the drive pin (57a) of the chain (57b) of the drive device (57).

10. Transport unit according to one of claims 7-9, characterised in that the transport pallets (56) each have a support profile imitating the support profile of the injection tool (14a, 14b) of the plastics injection moulding machine, said profile being formed by two parallel guide rails (56b) interconnected by at least one crossweb (56b), and whose cross-sectional profile corresponds to the cross-sectional profile of the contact plates (14a', 14b') of an injection tool (14a, 14b) to be transported during mould changeover on to a transport vehicle (F) set up for this purpose, there being located on at least one guide rail (56b) of the transport pallet (56) in each case at least one transverse groove (56a), into which an entrainment means of a transport chain of the transport vehicle can be directed.

## Revendications

1. Dispositif de transport pour l'évacuation d'articles injectés (65) d'une presse d'injection de matière plastique, à l'aide de palettes (55) qui, après avoir été enlevées d'une tour de palettes (54), sont remplies dans un poste de remplissage (Fs) dans la région de la presse d'injection puis sont transférées en retour du poste de remplissage dans la tour de palettes, qui présente au moins un élévateur (53), déplaçable sur des éléments d'ossature (54a'), librement mobile en cas de besoin pendant le processus de remplissage et destiné à recevoir au moins deux unités de transport (T ; T'), les palettes (55) pouvant être, pour former les unités de transport, réunies à des palettes de transport (56) soutenues sur l'élévateur (53), **caractérisé** en ce que les palettes de transport (56) soutiennent individuellement les palettes (55) sur des éléments porteurs qui, selon la hauteur des palettes, portent un nombre différent de guides de palettes, et en ce que l'élévateur (53) se trouve, tant lors de l'enlèvement des palettes (55) que lors du transfert des palettes remplies (55) dans la tour de palettes (54), dans une position qui permet de transférer la palette remplie (55) au moins à la même place, dans l'unité de transport (T ; T'), où la palette (55) a été enlevée de cette unité de transport.

2. Dispositif selon la revendication 1, **caractérisé** en ce que l'élévateur (53) peut être déplacé verticalement au moins d'un mécanisme à broche de levage (62), soutenu sur l'ossature de profilés (54a) de la tour de palettes (54) et dont l'écrou fileté (62b) fixé sur l'élévateur (53) se trouve en prise avec la broche de levage rotative (62a) de ce mécanisme à broche de levage (62), le moteur (62c) de ce mécanisme étant disposé horizontalement quasiment dans la projection verticale de l'ossature de profilés (54a) de la tour de palettes (54) et entraînant la broche de levage (62a) par l'intermédiaire d'une transmission de renvoi.

3. Dispositif selon l'une des revendications précédentes, **caractérisé** en ce que la tour de palettes (54) est au moins deux fois plus haute que l'élévateur (53), dans lequel au moins deux unités de transport (T ; T') peuvent être reçues l'une au-dessus de l'autre et sur lequel sont prévus deux fourches réceptrices (53a) pour des unités de transport (T ; T'), fourches qui sont formées par deux rails parallèles (53a') mutuellement reliés par au moins une branche transversale (53a'').

4. Dispositif selon l'une des revendications précédentes, **caractérisé** en ce que des transmetteurs de signaux (60) sont disposés sur l'ossature de profilés (54a) de la tour de palettes (54), transmetteurs dont le nombre correspond au nombre maximal possible de palettes dans l'unité de transport (T ; T') et dont l'écartement mutuel correspond à une palette (55) de hauteur minimale, et en ce que les palettes (55) sont pourvues en cas de besoin d'un code barres (55k) qui est lu par des capteurs de lecture (61) disposés sur le poste de remplissage.

5. Dispositif selon l'une des revendications précédentes, **caractérisé** en ce que les unités de transport (T ; T') peuvent, au moyen d'un dispositif de remise, être respectivement sorties de la tour de palettes (54) ou rentrées dans cette dernière par l'arrière, respectivement pour les remettre à un moyen de transport ou pour les recevoir de ce dernier, le moyen de transport étant un chariot de transport (F) conçu pour le transport de moules d'injection (14a, 14b), et en ce que les palettes de transport (56) présentent chacune un profilé d'appui reproduisant le profilé d'appui du moule d'injection (14a, 14b) de la presse d'injection de matière plastique.

6. Dispositif selon la revendication 5, **caractérisé** en ce que le chariot de transport (F) est pourvu du dispositif de remise, par lequel une unité de transport (T ; T') peut être tirée hors de la tour de palettes (54) ou, selon le cas, poussée dans cette dernière par l'arrière ou par le côté, par le fait qu'au moins une rainure transversale respective (56a) est disposée sur au moins un rail de guidage (56b) de la palette de transport (56), rainure dans laquelle peut être guidé un entraîneur d'une chaîne de transport du chariot de transport.

7. Unité de transport, notamment pour l'évacuation d'articles injectés d'un dispositif selon les revendications 1 à 6, qui est constituée d'une palette de transport (56) et d'au moins une palette (55) réunie en cas de besoin à la palette de transport, la palette (55) pouvant être séparée de l'unité de transport afin de remplir cette palette des articles injectés provenant de la presse d'injection, **caractérisée** en ce que la palette de transport (56) présente des éléments porteurs (56e) qui sont prévus pour le raccordement d'un nombre différent, selon la hauteur des palettes, de guides de palettes (59) qui soutiennent individuellement les palettes (55).

8. Unité de transport selon la revendication 7, **caractérisée** en ce que les éléments porteurs (56e) sont verticaux et peuvent, en cas de besoin, être retirés de la palette de transport (56) au niveau d'éléments de raccordement (56d) de la palette de transport.

9. Unité de transport selon la revendication 7 ou 8, **caractérisée** en ce que la palette (55) est elle-même maintenue dans une plaque d'appui (51), qui est guidée sur les guides de palettes (59) de la palette de transport (56) qui sont fixés sur les éléments porteurs verticaux (56e) qui se dressent librement, la plaque d'appui (51) présentant l'élément d'accouplement (51a) pour la broche d'entraînement (57a) de la chaîne (57b) du mécanisme d'entraînement (57).

10. Unité de transport selon l'une des revendications 7 à 9, **caractérisée** en ce que les palettes de transport (56) présentent chacune un profilé d'appui reproduisant le profilé d'appui du moule d'injection (14a, 14b) de la presse d'injection de matière plastique, profilé qui est formé par deux rails de guidage parallèles (56b) mutuellement reliés par au moins une branche transversale (56c), rails dont le profil de section correspond au profil de section des plaques d'application (14a', 14b') d'un moule d'injection (14a, 14b) à transporter lors du changement de moule sur un chariot de transport (F) conçu à cet effet, au moins une rainure transversale respective (56a) étant disposée sur au moins un rail de guidage (56b) de la palette de transport (56), rainure dans laquelle peut être guidé un entraîneur d'une chaîne de transport du chariot de transport.
